# EUROPÄISCHE PATENTSCHRIFT

(11) **EP 2 767 442 B1**
(45) Veröffentlichungstag und Bekanntmachung des Hinweises auf die Patenterteilung: **05.04.2017**
(21) Anmeldenummer: 13155439.6
(22) Anmeldetag: 15.02.2013
(51) Int. Cl.: B60R 19/56

(54) **Einrichtung zum Schutz vor Unterfahren eines Nutzfahrzeugs und mit einer solchen Einrichtung ausgestattetes Nutzfahrzeug**
Device for protection against driving under a commercial vehicle and commercial vehicle provided with such a device
Dispositif de protection de soutènement d'un véhicule utilitaire et véhicule utilitaire équipé d'un tel dispositif

(43) Veröffentlichungstag der Anmeldung: 20.08.2014
(73) Patentinhaber: Schmitz Cargobull AG, 48341 Altenberge (DE)
(72) Erfinder: Matzner, Daniel, 49086 Osnabrück (DE); Fischer, Jan, 48151 Münster (DE)
(74) Vertreter: Cohausz & Florack

(56) Entgegenhaltungen:
- EP-A1- 0 299 357
- DE-A1-102004 024 159
- US-A- 5 632 518

## Beschreibung

Die Erfindung betrifft eine Einrichtung zum Schutz vor Unterfahren eines Nutzfahrzeugs. Die betreffende Einrichtung umfasst dabei einen Stoßbalken, der im fertig montierten Zustand quer zur Längserstreckung des Nutzfahrzeugs ausgerichtet und von mindestens einem Träger getragen ist. Der Träger kann dabei um eine am Chassis des Nutzfahrzeug ausgebildete Trägerschwenkachse verschwenkt werden, um den Stoßbalken aus einer Gebrauchsstellung, in der er nahe dem Untergrund angeordnet ist, auf dem das Nutzfahrzeug steht, in eine Wartestellung zu bewegen, in der der Stoßbalken in größerer Entfernung vom Untergrund angeordnet ist. Um den Stoßbalken in dieser Stellung zu halten, ist eine Halteeinrichtung vorgesehen, die zum Zurückbewegen des Stoßbalkens in seine Gebrauchsstellung wieder gelöst werden kann.

Unterfahrschutzeinrichtungen werden am Heck des Nutzfahrzeugs montiert, um im Fall, dass ein Personenkraftwagen ("PKW") auf das Nutzfahrzeug auffährt, zu verhindern, dass der PKW unter das Nutzfahrzeug gerät. Um diese Funktion zu erfüllen, muss der Stoßbalken des Unterfahrschutzes sich bei Einsatz im normalen Straßenverkehr auf der üblichen Höhe der Stoßstangen von PKW's befinden. In dieser Gebrauchsstellung besteht in Folge dessen ein wesentlich geringerer Abstand zwischen dem Stoßbalken des Unterfahrschutzes und dem Untergrund, auf dem das Nutzfahrzeug steht oder fährt als dies aufgrund der bauartbedingten Höhe des Fahrwerks erforderlich wäre. Im Ergebnis ist so die unter dem Nutzfahrzeug effektiv vorhandene Bodenfreiheit deutlich eingeschränkt.

In bestimmten Situationen, wie beispielsweise beim Verladen des jeweiligen Nutzfahrzeugs auf einen speziell hierfür eingerichteten Eisenbahnwagon, behindert diese Einschränkung den Einsatz. Um diesen Behinderungen aus dem Weg zu gehen, sind Unterfahrschutzeinrichtungen der eingangs angegebenen Art eingeführt worden, bei denen der Stoßbalken aus seiner normalen Gebrauchsstellung, in der er bei Straßenfahrt den vorgeschriebenen geringen Abstand zur Fahrbahn hat, in eine Wartestellung geschwenkt werden kann, in der auch im Bereich des Fahrzeughecks eine maximale Bodenfreiheit zur Verfügung steht. Entsprechende Einrichtungen zum Schutz gegen Unterfahren sind beispielsweise in der EP 1 970 261 A2 beschrieben.

Ein Problem bei der Handhabung der bekannten Unterfahrschutzeinrichtungen mit verschwenkbarem Stoßbalken ergibt sich daraus, dass die Verschwenkung in der Regel manuell vorgenommen werden muss, da der Aufwand für eine motorische Verstellung groß und der dazu erforderliche Bauraum häufig nicht zur Verfügung steht. Zwar sind die bekannten Schutzeinrichtungen üblicherweise mit einer Halteeinrichtung ausgestattet, die den Stoßbalken nach dem Verschwenken in der Warteposition hält. Jedoch haben sich diese in der Praxis insbesondere vor dem Hintergrund als unpraktisch herausgestellt, dass das Entriegeln und Verschwenken des Stoßbalkens aus seiner Warte- in die Gebrauchsstellung üblicherweise vom Führer des Nutzfahrzeugs alleine ausgeführt werden muss. Hinzukommt bei vielen bekannten Halteeinrichtungen die Gefahr, dass sie sich in Folge von Erschütterungen selbsttätig lösen und der Stoßbalken unbeabsichtigt in seine Gebrauchsstellung zurückfällt.

Dokument EP0299357 offenbart eine Einrichtung zum Schutz vor Unterfahren eines Nutzfahrzeuges gemäß dem Oberbegriff des Anspruchs 1.

Vor dem Hintergrund des voranstehend erläuterten Standes der Technik bestand die Aufgabe der Erfindung darin, eine Einrichtung zum Schutz gegen Unterfahren zu schaffen, die sich auf einfache Weise aus ihrer Gebrauchs- in die Wartestellung bewegen, dort verriegeln und anschließend ebenso einfach wieder in die Gebrauchsstellung zurückbewegen lässt.

Ebenso sollte ein entsprechend beschaffenes Nutzfahrzeug angegeben werden.

Erfindungsgemäß wird diese Aufgabe im Hinblick auf die Einrichtung zum Schutz vor Unterfahren dadurch gelöst, dass eine solche Einrichtung mit den in Anspruch 1 angegebenen Merkmalen bereitgestellt wird.

Die erfindungsgemäße Lösung der oben genannten Aufgabe in Bezug auf das Nutzfahrzeug besteht darin, dass es mit einer erfindungsgemäßen Einrichtung zum Schutz gegen Unterfahren ausgestattet ist.

Vorteilhafte Ausgestaltungen der Erfindung sind in den abhängigen Ansprüchen angegeben und werden nachfolgend wie der allgemeine Erfindungsgedanke im Einzelnen erläutert.

Eine erfindungsgemäße Einrichtung zum Schutz vor Unterfahren eines Nutzfahrzeugs weist dementsprechend in Übereinstimmung mit dem eingangs genannten Stand der Technik einen Stoßbalken auf, der quer zur Längserstreckung des Nutzfahrzeugs ausgerichtet und von mindestens einem Träger getragen ist. Der Träger ist um eine am Chassis des Nutzfahrzeugs ausgebildete Trägerschwenkachse schwenkbar, um den Stoßbalken aus einer Gebrauchsstellung, in der er nahe dem Untergrund angeordnet ist, auf dem das Nutzfahrzeug steht, in eine Wartestellung zu schwenken, in der der Stoßbalken in größerer Entfernung vom Untergrund angeordnet ist. Dabei ist eine Halteeinrichtung zum lösbaren Verriegeln des Stoßbalkens in der Wartestellung vorgesehen.

Erfindungsgemäß ist nun diese Halteeinrichtung nach Art eines Kipphebels ausgebildet und um eine achsparallel zur Längsachse des Stoßbalkens ausgerichtete Kipphebelschwenkachse schwenkbar an dem Träger gelagert. Die nach Art eines Kipphebels ausgebildete Halteeinrichtung besitzt dabei erfindungsgemäß einen Betätigungsabschnitt, der zumindest bereichsweise von der Kipphebelschwenkachse in Richtung des Untergrunds zeigt, sowie einen Rastabschnitt, der zumindest bereichsweise von der Kipphebelschwenkachse ausgehend über die Oberseite des Trägers hinausragt und an seinem freien Ende einen Rastvorsprung trägt, der bei in Wartestellung geschwenktem Stoßbalken eine Raststellung einnimmt, in der es mit einer an einem Bauteil des Chassis ausgebildeten Raste lösbar verrastet ist.

Bei einer erfindungsgemäßen Einrichtung ist die Halteeinrichtung folglich direkt am mindestens einen Träger, der den Stoßbalken trägt, angeordnet und wird mit ihm verschwenkt. Schon hieraus ergibt sich der Vorteil, dass die Halteeinrichtung in unmittelbarer Reichweite eines Bedieners positioniert werden kann, der zum Zurückschwenken den Stoßbalken auf seinen Unterarmen abstützt.

Da gleichzeitig der Betätigungsabschnitt der Halteeinrichtung nach unten vom Träger absteht, kann der Nutzer ihn erreichen, ohne dazu umständliche Hand- oder Armbewegungen machen zu müssen. Vielmehr reicht es bei einer erfindungsgemäßen Halteeinrichtung aus, eine leichte Zugkraft auf den Betätigungsabschnitt aufzubringen, um die Halteeinrichtung aus ihrer verrasteten Stellung in eine Lösestellung zu bewegen. Dabei ist die Halteeinrichtung erfindungsgemäß so gelagert, dass das Aufbringen dieser Betätigungskraft auf den Betätigungsabschnitt und die Rückschwenkbewegung des Stoßbalkens in einer kontinuierlichen Bewegung erfolgen können, so dass die Entriegelung insgesamt mit minimiertem Kraftaufwand bewerkstelligt werden kann.

Ein weiterer Vorteil der erfindungsgemäßen Anordnung der Halteeinrichtung am Träger ergibt sich daraus, dass in der Wartestellung der Träger und der Stoßbalken über die Halteeinrichtung am zugeordneten Bauteil des Chassis hängen und so das Gewicht des Stoßbalkens und des Trägers auf der zwischen Halteeinrichtung und der am Chassis des Nutzfahrzeugs vorgesehenen Rastverbindung lastet. Die auf diese Weise in Schwerkraftrichtung wirkenden Lasten tragen bei geeigneter Ausbildung der Rastverbindung zur sicheren Verriegelung in der Wartestellung bei, indem sie den Rastvorsprung der Haltevorrichtung selbst dann noch in Anlage an der zugeordneten Raste halten, wenn das Nutzfahrzeug Stößen oder Vibrationen ausgesetzt ist.

Grundsätzlich ist es denkbar, den Stoßbalken mittels eines einzigen ausreichend dimensionierten Trägers am Chassis des Fahrzeugs zu befestigen. Selbstverständlich können jedoch auch, wie im Stand der Technik üblich, zwei oder mehr Träger vorgesehen sein. Dabei reicht es üblicherweise aus, wenn die erfindungsgemäße Halteeinrichtung an einem der Träger vorgesehen ist. Für eine gleichmäßige Abstützung des Stoßbalkens kann es jedoch auch zweckmäßig sein, zwei Träger mit jeweils einer Halteeinrichtung der erfindungsgemäßen Art auszustatten. Jedoch sollten dann die Träger so angeordnet sein, dass die bei ihnen vorgesehenen Halteeinrichtungen vom Nutzer gleichzeitig erreicht werden können, um die einfache Bedienbarkeit zu gewährleisten.

In der Praxis hat es sich als zweckmäßig erwiesen, den oder die jeweils vorgesehenen Träger als Profilelemente auszubilden, die einen Obergurt aufweisen. Typischerweise sind solche Profilelemente als umgekehrte U- oder L-Profile mit ausgehend vom oben angeordneten Obergurt in Richtung des jeweiligen Untergrunds, also der Straße, auf dem das Fahrzeug steht oder fährt, gerichteten Schenkeln ausgebildet.

Ein optimaler Schutz bei gleichzeitig betriebssicherer Anordnung ergibt sich bei Verwendung solcher Profilelemente als Träger, wenn die Kipphebelschwenkachse in Richtung des Untergrunds unterhalb des Obergurts positioniert ist und in den Obergurt eine Ausnehmung eingeformt ist, durch die der Rastabschnitt der Halteeinrichtung greift.

Eine weitere für die Praxis besonders vorteilhafte Ausgestaltung der Erfindung ist dadurch gekennzeichnet, dass die Halteeinrichtung bei in Wartestellung verrastetem Träger mit seinem Rastabschnitt von der vom Stoßbalken abgewandten Seite des mit der Raste versehenen Bauteils des Chassis her mit der dort vorgesehenen Raste zusammenwirkt. Dies kann durch eine entsprechende Positionierung der Kipphebelschwenkachse und Dimensionierung der Abschnitte der Halteeinrichtung erreicht werden. Ein Vorteil dieser Ausgestaltung besteht dabei darin, dass die Rastverbindung durch das Chassisbauteil, an dem die Raste ausgebildet ist, selbst geschützt ist. Darüber hinaus lässt sich auf diese Weise eine einfache optische Kontrolle der Rastverbindung ermöglichen. Dies kann dadurch geschehen, dass die Raste durch die Randkante einer in das Chassisbauteil eingeformten Ausnehmung gebildet ist. Indem der Rastvorsprung der Halteeinrichtung beim Verriegelungsvorgang von hinten in die Ausnehmung greift und dann mit der dort ausgebildeten Raste verrastet, kann der Nutzer den Verriegelungsvorgang laufend verfolgen und beurteilen, ob Rastvorsprung und Raste ordnungsgemäß zusammenwirken. Ebenso einfach lässt sich später per einfacher Sichtkontrolle prüfen, ob die Rastverbindung noch nach längerer Nutzung in Ordnung ist.

Als Bauteil, an dem am Chassis des Nutzfahrzeugs die Raste für den Rastvorsprung der Halteeinrichtung ausgebildet ist, eignet sich insbesondere ein heckseitig üblicherweise vorgesehener, quer zur Längserstreckung des Fahrzeugs ausgerichteter Querträger.

Die Handhabung und die Sicherheit der in Wartestellung der erfindungsgemäßen Unterfahrschutzeinrichtung hergestellten Rastverbindung kann dadurch noch verbessert werden, dass ein elastisches Element vorgesehen ist, das eine elastische Kraft ausübt, durch die die Halteeinrichtung in der Raststellung gehalten ist. Das elastische Element kann beispielsweise eine Feder oder ein Polster aus elastischem Material sein, die jeweils zwischen die Halteeinrichtung und einen am Träger vorgesehenen Anschlag gespannt sind, so dass sie eine in Richtung der Raststellung wirkendes Moment auf die Halteeinrichtung ausüben.

Grundsätzlich ist es möglich, die für die erfindungsgemäße vorgesehene Schwenkbewegung der Halteeinrichtung erforderliche Schwenkachse durch ein gesondertes Bauteil zu verwirklichen, auf dem die Halteeinrichtung in konventioneller Weise gelagert ist. Hierzu kann ein an dem Träger gelagertes Achselement vorgesehen sein, das mit ausreichendem Spiel durch ein zwischen dem Befestigungs-und dem Rastabschnitt der Halteeinrichtung ausgebildetes Lagerauge gesteckt ist. Unter den rauen Einsatzbedingungen, denen die erfindungsgemäße Einrichtung in der Praxis ausgesetzt ist, kann es jedoch zweckmäßig sein, auf eine solche vergleichbar verschleißanfällige Lagerung zu verzichten und stattdessen die Halteeinrichtung unter Ausnutzung des Kniehebelprinzips auszubilden. Hierzu können der Rastabschnitt und der Betätigungsabschnitt jeweils einen an die Kipphebelschwenkachse angrenzenden Bereich aufweisen, wobei die an die Kipphebelschwenkachse angrenzenden Bereiche von Rastabschnitt und Betätigungsabschnitt einen Winkel einschließen, der kleiner 180° ist. Bei dieser Formgebung stoßen der Betätigungs- und der Rastabschnitt im Bereich der Schwenkachse in einem Knick aufeinander. Die im Bereich dieses Knicks ausgebildete und gegen die zugeordnete Fläche des Trägers abgestützte Kante stellt dann die Schwenkachse dar, um die die Halteeinrichtung bei Betätigung verschwenkt wird. Bei einer solchen Formgebung hat es sich im Hinblick auf die Nutzung des im Bereich des jeweiligen Trägers zur Verfügung stehenden Bauraums zudem als zweckmäßig erwiesen, wenn das elastische Element auf den an die Kipphebelschwenkachse grenzenden Bereich des Rastabschnitts wirkt.

Im Fall, dass die Halteeinrichtung in der voranstehend angegebenen Weise gestaltet ist, kann eine einfache Verrastung des Rastabschnitts mit der am Chassis des Nutzfahrzeugs ausgebildeten Raste dadurch bewerkstelligt werden, dass beim Rastabschnitt ein die Raste tragender Bereich mit dem an die Kipphebelschwenkachse angrenzenden Bereich des Rastabschnitts einen Winkel einschließt, der kleiner als 180° ist. Diese Gestaltung erweist sich insbesondere dann als zweckmäßig, wenn der Rastvorsprung vom Heck des Nutzfahrzeugs gesehen von hinten in eine Aufnahme greifen soll, deren Umrandung als Raste dient.

Dem selben Ansatz folgend kann die Betätigung der erfindungsgemäßen Halteeinrichtung dadurch weiter erleichtert werden, dass beim Betätigungsabschnitt ein zwischen dem freien Ende und dem an die Kipphebelschwenkachse angrenzenden Bereich vorhandener Bereich mit dem an die Kipphebelschwenkachse angrenzenden Bereich einen Winkel einschließt, der kleiner als 180° ist. Eine solche Gestaltung ergibt eine Halteeinrichtung, bei der der Betätigungsabschnitt für den Nutzer optimal erreichbar an der Unterseite des Trägers vorsteht. Dies gilt insbesondere dann, wenn der Betätigungsabschnitt einen an sein freies Ende angrenzenden Bereich aufweist, der mit dem an die Kipphebelschwenkachse angrenzenden Bereich des Rastabschnitts einen Winkel einschließt, der höchstens 90° beträgt.

Wie bereits erläutert, ist es grundsätzlich mit der erfindungsgemäß von der Unterseite des Trägers her erfolgenden Bedienung der Halteeinrichtung auf besonders einfache Weise möglich, den Stoßbalken in seiner Wartestellung zu verriegeln und aus der Wartestellung zu entriegeln und wieder zurück in die Gebrauchsstellung zu schwenken. Unter bestimmten Bedingungen kann es jedoch auch gewünscht sein, eine Bedienung der Halteeinrichtung von der Oberseite des jeweiligen Trägers her vornehmen zu können.

Um dies zu ermöglichen, kann die Halteeinrichtung mit einer Betätigungseinrichtung zum Verschwenken der Halteeinrichtung aus ihrer Raststellung in eine Lösestellung verkoppelt sein. Eine solche zusätzliche, mechanisch mit der Halteeinrichtung verkoppelte Betätigung kann beispielsweise durch eine Zugstange verwirklicht werden, die zur Oberseite des Trägers hin vorsteht und über die Zug- oder Druckkräfte auf den Betätigungsabschnitt aufgebracht werden können, um die Halteeinrichtung aus ihrer verrasteten Stellung in eine Lösestellung zu bewegen.

Nachfolgend wird die Erfindung anhand einer ein Ausführungsbeispiel darstellenden Zeichnung näher erläutert. Es zeigen jeweils schematisch:
- Fig. 1: den Heckbereich eines Nutzfahrzeugchassis in seitlicher Ansicht;
- Fig. 2: das Heck eines Nutzfahrzeugs in einer Teilansicht von hinten;
- Fig. 3: eine Einrichtung zum Schutz vor Unterfahren durch ein Fahrzeug in Wartestellung in einem längsgeschnittenen vergrößerten Ausschnitt;
- Fig. 4: die Einrichtung zum Schutz vor Unterfahren durch ein Fahrzeug in entriegelter Stellung in einer der Fig. 3 entsprechenden Ansicht;
- Fig. 5: die Einrichtung zum Schutz vor Unterfahren durch ein Fahrzeug beim Verschwenken in die Gebrauchsstellung in einer der Fig. 3 entsprechenden Ansicht.

Die Einrichtung 1 zum Schutz vor Unterfahren durch ein Fahrzeug ist im Bereich des Hecks eines hier im Einzelnen nicht gezeigten Nutzfahrzeugs N angeordnet, bei dem es sich beispielsweise um einen Sattelauflieger für einen Sattelzug, einen Anhänger für einen Lastkraftwagen oder einen Lastkraftwagen selbst handeln kann. Das Nutzfahrzeug N steht und fährt im Normalbetrieb auf einem durch eine Straße gebildeten festen Untergrund U. Bei einem Transport beispielsweise auf einem hier nicht gezeigten Eisenbahnwagon wird der Untergrund U durch die jeweilige Ladefläche des Wagons gebildet.

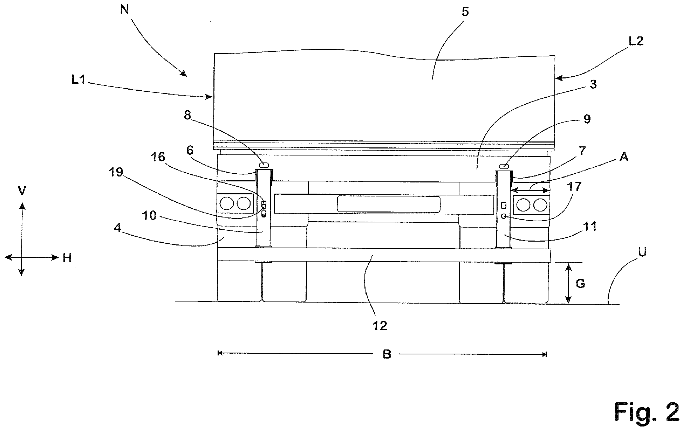

Das jeweilige Nutzfahrzeug N weist in an sich bekannter Weise ein durch Längsprofile 2 und Querprofile 3 gebildetes Chassis auf, an dem das Fahrwerk 4 des Nutzfahrzeugs gelagert ist und das den jeweiligen Nutzfahrzeugaufbau 5, von dem in Fig. 2 der Übersichtlichkeit halber nur ein an das Chassis angrenzender unterer Teil dargestellt ist.

Aus demselben Grund ist von den quer zur Längserstreckung L des Nutzfahrzeugs N ausgerichteten Querprofilen des Chassis hier nur das den heckseitigen Abschluss des Chassis bildende Querprofil 3 gezeigt. Das Querprofil 3 ist an den heckseitigen Köpfen der Längsprofile 2 befestigt, von denen hier nur eines sichtbar ist und von denen sich in der Regel zwei parallel und mit Abstand zueinander über die gesamte Länge des Nutzfahrzeugs N erstrecken. Das Querprofil 3 weist im Querschnitt die Form eines U's auf, dessen Basis in Montageposition in vertikaler Richtung V ausgerichtet ist und dessen parallel zueinander ausgerichtete Schenkel senkrecht davon abstehend in Richtung F (Fahrtrichtung bei Vorwärtsfahrt) der hier nicht sichtbaren vorderen Stirnseite des Nutzfahrzeugs N zeigen.

Mit jeweils einem Abstand A zur jeweils zugeordneten Längsseite L1,L2 des Nutzfahrzeugs N sind in den dem Untergrund U zugeordneten unteren Schenkel und die Basis des Querprofils 3 von dessen dem Untergrund U zugeordneten Unterseite her zwei Ausnehmungen 6,7 eingeschnitten, die bei Draufsicht auf die Basis des Querprofils 3 eine rechtwinklige Form aufweisen. Der Abstand A ist dabei so bemessen, dass die Ausnehmungen 6,7 jeweils mit ihrem der anderen Ausnehmung 7,6 zugeordneten Rand an die der jeweiligen Längsseite L1,L2 zugeordnete Seite der Längsprofile 2 angrenzen. Oberhalb der jeweiligen Ausnehmung 6,7 und mittig zu dieser angeordnet sind zusätzlich jeweils zwei kleinere fensterartige Ausnehmungen 8,9 eingeformt, die jeweils vollständig vom Material des Querprofils 3 umgeben sind.

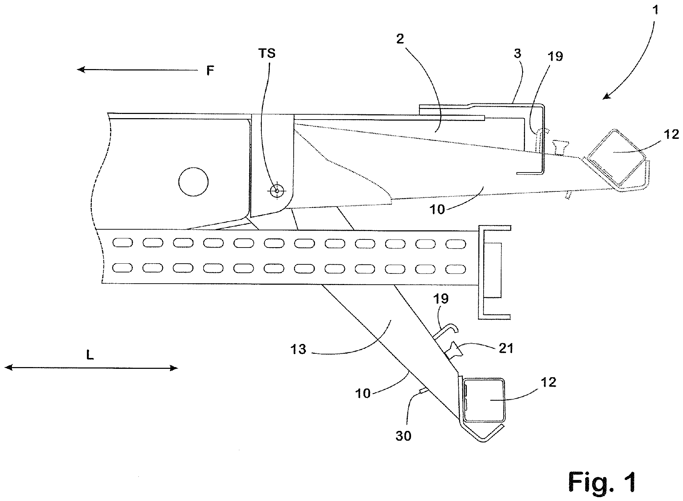

In Richtung F versetzt ist an der der jeweiligen Längsseite L1,L2 der Längsprofile 4 jeweils ein Träger 10,11 um eine Trägerschwenkachse TS schwenkbar gelagert, die quer zur Längserstreckung L ausgerichtet ist und sich bei normaler Fahrposition des Nutzfahrzeugs N in horizontaler Richtung H erstreckt. An ihren freien Enden tragen die Träger 10,11 gemeinsam einen Stoßbalken 12, der sich ebenfalls quer zur Längserstreckung L und achsparallel zur Trägerschwenkachse TS über die Breite B des Nutzfahrzeugs N erstreckt. Die Träger 10,11 können mit dem Stoßbalken 12 um die Trägerschwenkachsen TS aus einer normalen, in Fig. 1 in durchgezogenen Linien dargestellten Gebrauchsstellung, in der der Stoßbalken 12 mit einem geringem Abstand G zum Untergrund U angeordnet ist, in eine in Fig. 1 in gestrichelten Linien dargestellte Wartestellung geschwenkt werden, in der die Träger 10,11 mit dem Stoßbalken 12 gegen die Unterseite des Chassis geschwenkt und in einer im Wesentlichen horizontalen Ausrichtung gehalten sind. Die Träger 10,11 sind dabei so an den Längsprofilen 2 angeordnet, dass sie in der Wartestellung in die jeweils zugeordnete Ausnehmung 6,7 eingeschwenkt sind.

Der Stoßbalken 12 und die Träger 10,11 bilden gemeinsam einen Unterfahrschutz Z, der verhindert, dass sich bei einem heckseitigen Auffahrunfall ein PKW unter das Chassis des Nutzfahrzeugs N schiebt. Zu diesem Zweck ist die Länge und die Schräge, in Richtung des Hecks des Nutzfahrzeugs N und zum Untergrund weisende Ausrichtung der Träger 10,11 in Gebrauchsstellung so bemessen, dass der Stoßbalken 12 in Gebrauchsstellung mit geringem Abstand in Richtung F gegenüber dem Querprofil 3 versetzt im Abstand G zum Untergrund U gehalten ist. Der Abstand G entspricht dabei der Höhe einer Stoßstange eines normalen PKW's zum Untergrund U.

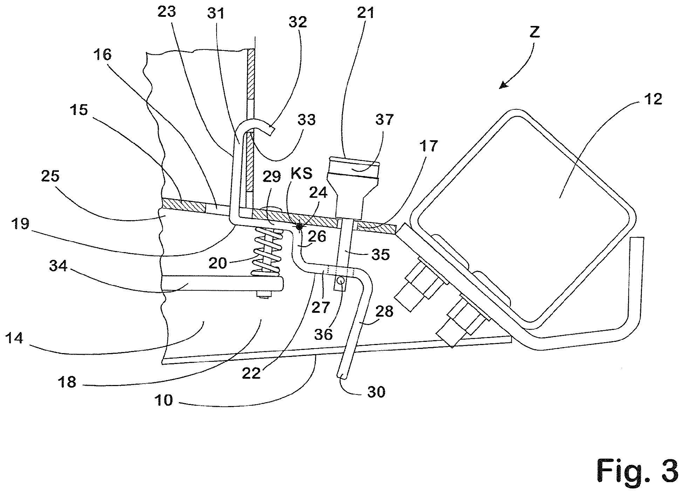

Die Träger 10,11 sind durch U-förmige Profile gebildet, deren Schenkel 13,14 in Richtung des Untergrunds U zeigen und dessen Obergurt (Basis) 15 den Abschluss der Träger 10,11 zu deren Oberseite hin bildet. In den Obergurt 15 der Träger ist jeweils eine fensterartige Ausnehmung 16 und eine in Richtung des freien Endes des jeweiligen Trägers 10,11 jeweils versetzt angeordnete weitere Durchgangsöffnung 17 eingeschnitten. Die Ausnehmung 16 ist dabei jeweils so angeordnet, dass sich ihr dem freien Ende des jeweiligen Trägers 10,11 zugeordneter Randbereich bei in Wartestellung geschwenktem Unterfahrschutz Z mit der gedachten Verlängerung der Basis des Querprofils 3 überschneidet (Fig. 3).

In dem einen Träger 10 ist eine Anordnung 18 zum Verriegeln des Unterfahrschutzes Z in der Wartestellung vorgesehen. Die Anordnung 18 umfasst eine Halteeinrichtung 19 und ein elastisches Element 20 sowie zusätzlich einen Zugknopf 21, der optional vorgesehen ist, um die Bedienbarkeit der Halteeinrichtung 19 zu erweitern.

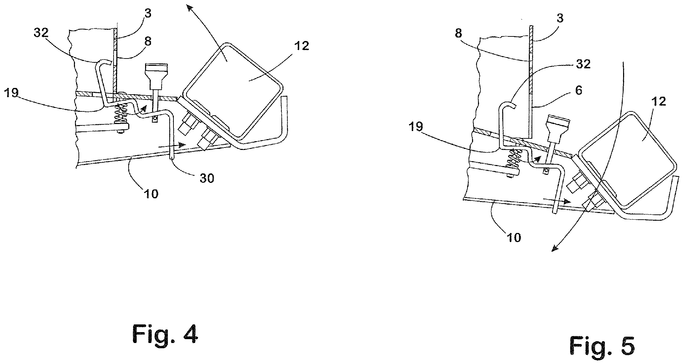

Die Halteeinrichtung 19 ist durch mehrfaches Kanten aus einem Blechstreifen geformt und in einen Betätigungsabschnitt 22 sowie einen Rastabschnitt 23 unterteilt. Der Betätigungsabschnitt 22 und der Rastabschnitt 23 treffen an einer Kante 24 aufeinander, an der die Halteeinrichtung 19 an der dem Untergrund U zugeordneten Unterseite 25 des Obergurts 15 des Trägers 10 abgestützt ist. Die Kante 24 bildet so eine Kipphebelschwenkachse KS, um die die Halteeinrichtung 19 aus einer Raststellung (Fig. 3) in eine Lösestellung (Fig. 4,5) schwenkbar ist.

Der Betätigungsabschnitt 22 ist wiederum in drei Bereiche 26,27,28 unterteilt, die jeweils winklig zueinander angeordnet sind, wobei der von den jeweils aneinander angrenzenden Bereichen 26,27 und 27,28 eingeschlossene Winkel jeweils höchstens 90° bemisst. Der erste Bereich 26 des Betätigungsabschnitts 22 grenzt an die die Kipphebelschwenkachse KS definierende Kante 24 der Halteeinrichtung 19 und ist im rechten Winkel zu einem ebenfalls an die Kante 24 angrenzenden ersten Bereich 29 des Rastabschnitts 23 ausgerichtet. An seiner von der Kante 24 abgewandten Schmalseite geht der erste Bereich 26 in den zweiten Bereich 27 des Betätigungsabschnitts 22 über, der im rechten Winkel zum ersten Bereich 26 angeordnet ist und so vom Rastabschnitt 23 wegweisend in Montagestellung zum freien Ende des Trägers 10 gerichtet ist. An den zweiten Bereich 27 schließt sich der dritte Bereich 28 des Betätigungsabschnitts 22 an. Dieser dritte Bereich 28 ist vom ersten Bereich 19 so abgeknickt, dass er in Montagestellung zum Untergrund U zeigt und dabei einen Winkel von ca. 85° mit dem zweiten Abschnitt 27 einschließt. Die Länge des zwischen dem zweiten Bereich 27 und dem freien Ende 30 des Betätigungsabschnitts 22 angeordneten dritten Bereichs 28 ist dabei so bemessen, dass das freie Ende 30 in Montagestellung um eine geringe Länge über den unteren Rand des Trägers 10 hinaus steht.

Zusätzlich zu seinem rechtwinklig zum ersten Bereich 26 des Betätigungsabschnitts 22 angeordneten ersten Bereich 29 weist der Rastabschnitt 23 einen zweiten Bereich 31 auf, der an den ersten Bereich 29 des Rastabschnitts 23 angeschlossen und senkrecht zu diesem so ausgerichtet ist, dass der zweite Bereich 31 in Montagestellung vom Betätigungsabschnitt 22 wegweisend in Richtung des Querprofils 3 gerichtet ist. Der zweite Bereich 31 greift dabei durch die Ausnehmung 6 des Trägers 10 und steht so in Montagestellung über dessen Obergurt 15 hinaus. An seinem freien Ende ist der zweite Bereich 31 hakenförmig in Richtung des Betätigungsabschnitts 22 gebogen und bildet so einen Rastvorsprung 32, der in Montagestellung in Richtung des freien Endes des Trägers 10 weist.

Die Längen und Ausrichtungen der Bereiche 26,27,28,29 und 31 der Halteeinrichtung 19 sowie die Position der sich aus der Position der Kante 24 ergebenden Kipphebelschwenkachse KS sind so gewählt, dass in Montagestellung bei in Wartestellung geschwenktem Unterfahrschutz Z der Rastvorsprung 32 von der vom Heck des Nutzfahrzeugs N abgewandten, in Richtung F weisenden Rückseite des Querprofils 3 her durch die zugeordnete fensterartige Ausnehmung 8 greift. Der untere, die fensterartige Ausnehmung 8 begrenzende Rand bildet dabei eine Raste 33, mit der der Rastvorsprung 32 bei in Wartestellung geschwenktem Unterfahrschutz Z verrastet ist.

Um ein selbsttätiges Einfallen in diese Raststellung zu ermöglichen, ist die Halteeinrichtung 19 durch das elastische Element 20 belastet, bei dem es sich vorliegend um eine konventionelle Spiralfeder handelt. Das elastische Element 20 ist dazu zwischen einer an einem der Schenkel 14 des Trägers 10 befestigten Stütze 34 und dem an die Kante 24 angrenzenden Bereich 29 des Rastabschnitts 23 gespannt, so dass die Halteeinrichtung 19 vom elastischen Element 20 mit dem Bereich 29 flach anliegend an die Unterseite 25 des Obergurts 15 gedrückt wird.

Gemäß einer hier nicht dargestellten Alternative ist es auch möglich, das elastische Element durch ein am Obergurt 15 gehaltenes Stützelement zu verspannen. Dazu wird das Stützelement am Obergurt 15 befestigt und durch oder entlang des elastischen Elements 20 geführt, so dass sein freies, dem Untergrund U zugewandtes Ende über das dem Untergrund U zugewandte Ende des elastischen Elements hinaus steht. Auf dem freien Endes des Stützelements sitzt dann ein Spannelement, auf dem wiederum das elastische Element 20 abgestützt ist. Über eine Verstellung des Spannelements kann die Kraft eingestellt werden, mit dem das elastische Element gegen die Halteeinrichtung 19 drückt. Zu diesem Zweck kann es sich bei dem Stützelement um einen Schraubenbolzen und bei dem Spannelement um eine auf das Spannelement aufgeschraubte Mutter handeln.

Der als zusätzliche Betätigungseinrichtung zum Entriegeln der Halteeinrichtung 19 aus ihrer Raststellung dienende Zugknopf 21 weist eine Zugstange 35 auf, die jeweils mit großem Spiel durch die Durchgangsöffnung 16 des Trägers 10 gesteckt und durch eine in den Bereich 27 eingeformte Öffnung der Halteeinrichtung 19 geführt ist. Mittels eines an dem in Richtung des Untergrunds U über den Bereich 27 hinaus stehenden Endabschnitt der Zugstange 35 befestigten Riegels 36 ist der Zugknopf 21 mit der Halteeinrichtung 19 so verkoppelt, dass über den Zugknopf 21 eine in vertikaler Richtung nach oben gerichtete Zugkraft auf den Betätigungsabschnitt 22 der Halteeinrichtung 19 aufgebracht werden kann. Der Durchmesser des Kopfes 37 des Zugknopfes 21 ist dabei so bemessen, dass er bei Nichtgebrauch auf der Oberseite des Obergurts 15 des Trägers 10 sitzt.

Beim Einschwenken des Unterfahrschutzes Z in die Wartestellung fällt der Rastvorsprung 32 der Halteeinrichtung 19 in Folge der federnd elastischen Belastung durch das elastische Element 20 selbsttätig in die Raste 33, so dass der Stoßbalken 12 sicher in der Wartestellung gehalten ist.

Zum Lösen der so hergestellten Verriegelung wird der Unterfahrschutz Z durch Anheben des Stoßbalkens 12 leicht nach oben geschwenkt, so dass der Rastvorsprung 32 aus der Raste 33 ausgehakt wird. Dann wird durch von der Unterseite des Trägers 10 erfolgendes Ziehen an dem nach unten stehenden Bereich 28 des Betätigungsabschnitts oder durch von der Oberseite des Trägers 10 her erfolgendes Ziehen des Zugknopfes 21 die Halteeinrichtung 19 um die Kipphebelschwenkachse KS so verschwenkt, dass sich der Rastvorsprung 32 in Richtung F aus der fensterartigen Öffnung 8 bewegt. Nun kann der Unterfahrschutz Z nach unten in seine Gebrauchsstellung geschwenkt werden (Figuren 4,5).

Eine erfindungsgemäße Einrichtung 1 zum Schutz vor Unterfahren eines Nutzfahrzeugs umfasst somit einen von mindestens einem Träger 10,11 getragenen Stoßbalken 12, der um eine Trägerschwenkachse TS schwenkbar ist, um aus einer Gebrauchsstellung nahe dem Untergrund U in eine weiter vom Untergrund U entfernte Wartestellung bewegt zu werden, in der er mittels der Halteeinrichtung 19 verriegelt werden kann. Um eine einfache Handhabung der Verriegelung zu ermöglichen, ist die Halteeinrichtung 19 nach Art eines Kipphebels ausgebildet und um eine achsparallel zum Stoßbalken 12 ausgerichtete Kipphebelschwenkachse KS schwenkbar an dem Träger 10 gelagert. Die Halteeinrichtung 19 weist den von der Kipphebelschwenkachse KS in Richtung des Untergrunds U zeigenden Betätigungsabschnitt 22 sowie den von der Kipphebelschwenkachse KS über die Oberseite des Trägers 10 hinausragenden Rastabschnitt 23 auf. Der Rastabschnitt 23 trägt den Rastvorsprung 32, der bei in Wartestellung geschwenktem Stoßbalken 12 mit seiner am Bauteil 3 des Chassis ausgebildeten Raste 33 lösbar verrastet ist.

### BEZUGSZEICHEN

- 1: Einrichtung zum Schutz vor Unterfahren
- 2: Längsprofil
- 3: Querprofil
- 4: Fahrwerk
- 5: Nutzfahrzeugaufbau
- 6, 7: Ausnehmungen
- 8, 9: fensterartige Ausnehmungen
- 10, 11: Träger
- 12: Stoßbalken
- 13, 14: Schenkel der Träger 10,11
- 15: Obergurt der Träger 10,11
- 16: Ausnehmung im Obergurt 15
- 17: Durchgangsöffnung im Obergurt 15
- 18: Anordnung zum Verriegeln des Unterfahrschutzes Z
- 19: Halteeinrichtung
- 20: elastisches Element (Feder)
- 21: Zugknopf
- 22: Betätigungsabschnitt der Halteeinrichtung 19
- 23: Rastabschnitt der Halteeinrichtung 19
- 24: Kante der Halteeinrichtung 19
- 25: Unterseite des Obergurts 15 des Trägers 10
- 26-28: Bereiche des Betätigungsabschnitts 22
- 29: Bereich des Rastabschnitts 23
- 30: freies Ende des Betätigungsabschnitts 22
- 31: zweiter Bereich des Rastabschnitts 23
- 32: Rastvorsprung des Rastabschnitts 23
- 33: Raste
- 34: Stütze
- 35: Zugstange des Zugknopfs 21
- 36: Riegel
- 37: Kopf des Zugknopfes 21

- A: Abstand
- B: Breite des Nutzfahrzeugs N
- F: Fahrtrichtung bei Vorwärtsfahrt
- G: Abstand zum Untergrund U in Gebrauchsstellung
- H: horizontale Richtung
- KS: Kipphebelschwenkachse
- L: Längserstreckung des Nutzfahrzeugs N
- L1, L2: Längsseiten des Nutzfahrzeugs N
- N: Nutzfahrzeug
- TS: Trägerschwenkachse
- U: Untergrund
- V: vertikale Richtung
- Z: Unterfahrschutz

## Patentansprüche

1. Einrichtung zum Schutz vor Unterfahren eines Nutzfahrzeugs (N), mit einem Stoßbalken (12), der quer zur Längserstreckung (L) des Nutzfahrzeugs (N) ausgerichtet und von mindestens einem Träger (10,11) getragen ist, der um eine am Chassis des Nutzfahrzeugs (N) ausgebildete Trägerschwenkachse (TS) schwenkbar ist, um den Stoßbalken (12) aus einer Gebrauchsstellung, in der er nahe dem Untergrund (U) angeordnet ist, auf dem das Nutzfahrzeug (N) steht, in eine Wartestellung zu bewegen, in der der Stoßbalken (12) in größerer Entfernung vom Untergrund (U) angeordnet ist, wobei eine Halteeinrichtung (19) zum lösbaren Verriegeln des Stoßbalkens (12) in der Wartestellung vorgesehen ist, **dadurch gekennzeichnet, dass** die Halteeinrichtung (19) nach Art eines Kipphebels gebildet ist und um eine achsparallel zum Stoßbalken (12) ausgerichtete Kipphebelschwenkachse (KS) schwenkbar an dem Träger (10) gelagert ist und einen Betätigungsabschnitt (22), der zumindest bereichsweise von der Kipphebelschwenkachse (KS) in Richtung des Untergrunds (U) zeigt, sowie einen Rastabschnitt (23) aufweist, der zumindest bereichsweise von der Kipphebelschwenkachse (KS) ausgehend über die Oberseite des Trägers (10) hinausragt und an seinem freien Ende einen Rastvorsprung (32) trägt, der bei in Wartestellung geschwenktem Stoßbalken (12) eine Raststellung einnimmt, in der er mit einer an einem Bauteil (3) des Chassis ausgebildeten Raste (33) lösbar verrastet ist.

2. Einrichtung nach Anspruch 1, **dadurch gekennzeichnet, dass** der Träger (10) durch ein Profilelement gebildet ist, das einen Obergurt (15) aufweist, **dass** die Kipphebelschwenkachse (KS) in Richtung des Untergrunds (U) unterhalb des Obergurts (15) positioniert ist und **dass** in den Obergurt (15) eine Ausnehmung (16) eingeformt ist, durch die der Rastabschnitt (23) der Halteeinrichtung (19) greift.

3. Einrichtung nach einem der voranstehenden Ansprüche, **dadurch gekennzeichnet, dass** die Halteeinrichtung (19) bei in Wartestellung verrastetem Träger (10) mit ihrem Rastabschnitt (23) von der vom Stoßbalken (12) abgewandten Seite des mit der Raste (33) versehenen Bauteils (3) des Chassis her mit der dort vorgesehenen Raste (33) zusammenwirkt.

4. Einrichtung nach einem der voranstehenden Ansprüche, **dadurch gekennzeichnet, dass** ein elastisches Element (20) vorgesehen ist, das eine elastische Kraft ausübt, durch die die Halteeinrichtung (19) in der Raststellung gehalten ist.

5. Einrichtung nach einem der voranstehenden Ansprüche, **dadurch gekennzeichnet, dass** der Rastabschnitt (23) und der Betätigungsabschnitt (22) jeweils einen an die Kipphebelschwenkachse (KS) angrenzenden Bereich (26,29) aufweisen und **dass** die an die Kipphebelschwenkachse (KS) angrenzenden Bereiche (26,29) von Rastabschnitt (23) und Betätigungsabschnitt (22) unter Ausbildung einer Kante (24) einen Winkel einschließen, der kleiner 180° ist.

6. Einrichtung nach Anspruch 4 und 5, **dadurch gekennzeichnet, dass** das elastische Element (20) auf den an die Kipphebelschwenkachse (KS) grenzenden Bereich (29) des Rastabschnitts (23) wirkt.

7. Einrichtung nach einem der Ansprüche 5 oder 6, **dadurch gekennzeichnet, dass** beim Rastabschnitt (23) ein den Rastvorsprung (32) tragender Bereich (31) mit dem an die Kipphebelschwenkachse (KS) angrenzenden Bereich (29) des Rastabschnitts (23) einen Winkel einschließt, der kleiner als 180° ist.

8. Einrichtung nach einem der Ansprüche 5 bis 7, **dadurch gekennzeichnet, dass** beim Betätigungsabschnitt (22) ein zwischen dem freien Ende (30) und dem an die Kipphebelschwenkachse (KS) angrenzenden Bereich (26) vorhandener Bereich (27) mit dem an die Kipphebelschwenkachse (KS) angrenzenden Bereich (27) einen Winkel einschließt, der kleiner als 180° ist.

9. Einrichtung nach Anspruch 8, **dadurch gekennzeichnet, dass** der Betätigungsabschnitt (22) einen an sein freies Ende angrenzenden Bereich (28) aufweist, der mit dem an die Kipphebelschwenkachse (KS) angrenzenden Bereich (26) des Rastabschnitts (23) einen Winkel einschließt, der höchstens 90° beträgt.

10. Einrichtung nach einem der voranstehenden Ansprüche, **dadurch gekennzeichnet, dass** die Halteeinrichtung (19) mit einer Betätigungseinrichtung (21) zum Verschwenken der Halteeinrichtung (19) aus ihrer Raststellung in eine Lösestellung verkoppelt ist.

11. Einrichtung nach einem der voranstehenden Ansprüche, **dadurch gekennzeichnet, dass** der Träger (10) ein zum Untergrund hin geöffnetes U-Profil ist.

12. Einrichtung nach einem der voranstehenden Ansprüche, **dadurch gekennzeichnet, dass** der Rastvorsprung (32) des Rastabschnitts (23) der Halteeinrichtung (19) hakenförmig ausgebildet ist.

13. Nutzfahrzeug mit einem Chassis, an dessen Rückseite eine gemäß einem der voranstehenden Ansprüche ausgebildete Einrichtung (Z) angeordnet ist.

14. Nutzfahrzeug nach Anspruch 13, **dadurch gekennzeichnet, dass** das Bauteil des Chassis, an dem die Raste (33) für die Halteeinrichtung (19) vorgesehen ist, ein quer zur Längserstreckung (L) des Nutzfahrzeugs (N) ausgerichtetes Querprofil (3) des Chassis ist.

15. Nutzfahrzeug nach Anspruch 14, **dadurch gekennzeichnet, dass** die Raste (33) durch die Randkante einer in das Querprofil (3) eingeformten Ausnehmung (8) gebildet ist.

## Claims

1. Device for protecting against the underriding of a commercial vehicle (N), having a buffer beam (12) which is aligned transversely to the longitudinal extension (L) of the commercial vehicle (N) and is supported by at least one support (10, 11) which is pivotable around a support pivot axis (TS) designed on the chassis of the commercial vehicle (N) in order to move the buffer beam (12) out of a usage position, in which it is arranged close to the ground (U) on which the commercial vehicle (N) is located, into a waiting position in which the buffer beam (12)is arranged at a greater distance from the ground (U), wherein a holding device (19) is provided for detachable locking of the buffer beam (12) in the waiting position, **characterised in that** the holding device (19) is formed in the manner of a rocker arm and is mounted pivotably on the support (10) around a rocker arm pivot axis (KS) aligned axially parallel to the buffer beam (12) and comprises an actuation section (22), which points at least in regions from the rocker arm pivot axis (KS) in the direction of the ground (U) as well as a latching section (23), which protrudes at least in regions from the rocker arm pivot axis (KS) over the upper side of the support (10) and supports a latching projection (32) on its free end which adopts a latching position when the buffer beam (12) is pivoted in the waiting position, in said latching position it is detachably latched with a latch (33) designed on a component (3) of the chassis.

2. Device according to claim 1, **characterised in that** the support (10) is formed by a profile element which comprises an upper belt (15), **in that** the rocker arm pivot axis (KS) is positioned in the direction of the ground (U) below the upper belt (15) and **in that** a recess (16) is formed into the upper belt (15) through which the latching section (23) of the holding device (19) enters.

3. Device according to any one of the preceding claims, **characterised in that** when the support (10) is latched in the waiting position, the holding device (19) cooperates with the latch (33) provided on the component (3) of the chassis, with its latching section (23) from the side, facing away from the buffer beam (12), of the component (3) of the chassis provided with the latch (33).

4. Device according to any one of the preceding claims, **characterised in that** an elastic element (20) is provided which exerts an elastic force by way of which the holding device (19) is held in the latching position.

5. Device according to any one of the preceding claims, **characterised in that** the latching section (23) and the actuation section (22) respectively comprise a region (26, 29) adjoining the rocker arm pivot axis (KS) and **in that** the regions (26, 29) of latching section (23) and actuation section (22) adjoining the rocker arm pivot axis (KS) form an edge (24), enclosing an angle which is smaller than 180°.

6. Device according to claim 4 and 5, **characterised in that** the elastic element (20) acts on the region (29) of the latching section (23) bordering the rocker arm pivot axis (KS).

7. Device according to any one of claims 5 or 6, **characterised in that** in the case of the latching section (23), a region (31) supporting the latching projection (32) encloses an angle smaller than 180° with the region (29) of the latching section (23) adjoining the rocker arm pivot axis (KS).

8. Device according to any one of claims 5 to 7, **characterised in that** in the case of the actuation section (22) a region (27) present between the free end (30) and the region (26) adjoining the rocker arm pivot axis (KS) encloses an angle with the region (27) adjoining the rocker arm pivot axis (KS), said angle is smaller than 180°.

9. Device according to claim 8, **characterised in that** the actuation section (22) has a region (28) adjoining its free end, said region encloses an angle with the region (26) of the latching section (23) adjoining the rocker arm pivot axis (KS), said angle is at most 90°.

10. Device according to any one of the preceding claims, **characterised in that** the holding device (19) is coupled with an actuation device (21) in order to pivot the holding device (19) from its latching position into a release position.

11. Device according to any one of the preceding claims, **characterised in that** the support (10) is a U-shaped profile opened towards the ground.

12. Device according to any one of the preceding claims, **characterised in that** the latching projection (32) of the latching section (23) of the holding device (19) is designed in a hook shape.

13. Commercial vehicle with a chassis on the rear side of which is arranged a device (Z) designed according to any one of the preceding claims.

14. Commercial vehicle according to claim 13, **characterised in that** the component of the chassis, on which the latch (33) for the holding device (19) is provided, is a transverse profile (3) of the chassis aligned transverse to the longitudinal extension (L) of the commercial vehicle (N).

15. Commercial vehicle according to claim 14, **characterised in that** the latch (33) is formed by the edge of a recess (8) formed into the transverse profile (3).

## Revendications

1. Dispositif de protection de soutènement d'un véhicule utilitaire (N) avec une poutre de choc (12), laquelle est orientée transversalement par rapport à l'étendue longitudinale (L) du véhicule utilitaire (N) et est portée par au moins un élément porteur (10, 11) qui est susceptible de pivoter autour d'un axe de pivotement d'élément porteur (TS) conçu sur le châssis du véhicule utilitaire (N) afin de déplacer la poutre de choc (12) d'une position d'utilisation, dans laquelle elle est agencée proche du fond (U) sur lequel se trouve le véhicule utilitaire (N), en une position d'attente, dans laquelle la poutre de choc (12) est agencée à une grande distance du fond (U), auquel cas l'on prévoit un dispositif de retenue (19) pour le verrouillage de façon amovible de la poutre de choc (12) en position d'attente, **caractérisé en ce que** le dispositif de retenue (19) est formé à la façon d'un levier basculant et est logé pivotant sur l'élément porteur (10) autour d'un axe de pivotement de levier basculant (KS) orienté de manière parallèle à l'axe par rapport à la poutre de choc (12) et qui présente une section d'actionnement (22) qui pointe, au moins par endroits, à partir de l'axe de pivotement de levier basculant (KS) en direction du fond (U), ainsi qu'une section d'encliquetage (23) qui fait saillie, au moins par endroits, à partir de l'axe de pivotement de levier basculant (KS) au-delà de la surface supérieure de l'élément porteur (10) et qui porte au niveau de son extrémité libre une saillie d'encliquetage (32) qui, lors d'une poutre de choc (12) pivotée en position d'attente, occupe une position d'encliquetage dans laquelle elle est encliquetée, de manière amovible, avec une encoche (33) conçue sur un élément structurel (3) du châssis.

2. Dispositif selon la revendication 1,
**caractérisé en ce que** l'élément porteur (10) est formé par un élément profilé qui présente une membrure supérieure (15), **en ce que** l'axe de pivotement du levier basculant (KS) est positionné en direction du fond (U) en dessous de la membrure supérieure (15) et **en ce qu'un** évidement (16) est conçu dans la membrure supérieure (15), à l'aide duquel la section d'encliquetage (23) entre en prise avec le dispositif de retenue (19).

3. Dispositif selon une des revendications précédentes, **caractérisé en ce que** le dispositif de retenue (19), lors de l'élément porteur (10) enclenché en position d'attente, interagit avec sa section d'encliquetage (23), à partir du côté de l'élément structurel (3) du châssis pourvu de l'encoche (33) étant opposé à la poutre de choc (12), avec l'encoche (33) prévue à cet endroit.

4. Dispositif selon une des revendications précédentes, **caractérisé en ce que** l'on prévoit un élément élastique (20) qui exerce une force élastique à l'aide de laquelle le dispositif de retenue (19) est retenu dans la position d'encliquetage.

5. Dispositif selon une des revendications précédentes, **caractérisé en ce que** la section d'encliquetage (23) et la section d'actionnement (22) présentent respectivement un secteur (26, 29) adjacent à l'axe de pivotement du levier basculant (KS) et q u e les secteurs (26, 29) adjacents à l'axe de pivotement du levier basculant (KS) définissent, à partir de la section d'encliquetage (23) et de la section d'actionnement (22) et en formant un bord (24), un angle qui est inférieur à 180°.

6. Dispositif selon les revendications 4 et 5,
**caractérisé en ce que** l'élément élastique (20) agit sur le secteur (29) adjacent à l'axe de pivotement du levier basculant (KS) de la section d'encliquetage (23).

7. Dispositif selon une des revendications 5 ou 6, **caractérisé en ce que,** au niveau de la section d'encliquetage (23), un secteur (31) portant la saillie d'encliquetage (32) définit avec le secteur (29) de la section d'encliquetage (23) adjacent à l'axe de pivotement de levier basculant (KS) un angle qui est inférieur à 180°.

8. Dispositif selon une des revendications de 5 à 7, **caractérisé en ce que,** au niveau de la section d'actionnement (22), un secteur (27) existant entre les extrémités libres (30) et le secteur (26) adjacent à l'axe de pivotement de levier basculant (KS) définit avec le secteur (27) adjacent à l'axe de pivotement de levier basculant (KS) un angle qui est inférieur 180°.

9. Dispositif selon la revendication 8, **caractérisé en ce que** la section d'actionnement (22) présente un secteur (28) adjacent à ses extrémités libres qui définit avec le secteur (26) de la section d'encliquetage (23) adjacent à l'axe de pivotement de levier basculant (KS) un angle étant au maximum de 90°.

10. Dispositif selon une des revendications précédentes, **caractérisé en ce que** le dispositif de retenue (19) est couplé à un dispositif d'actionnement (21) pour le pivotement du dispositif de retenue (19) hors de sa position d'encliquetage en une position de desserrage.

11. Dispositif selon une des revendications précédentes, **caractérisé en ce que** l'élément porteur (10) est un profil en U ouvert vers le fond.

12. Dispositif selon une des revendications précédentes, **caractérisé en ce que** la saillie d'encliquetage (32) de la section d'encliquetage (23) du dispositif de retenue (19) est conçue en forme de crochet.

13. Véhicule utilitaire avec un châssis sur le côté arrière duquel est agencé un dispositif (Z) conçu conformément à une des revendications précédentes.

14. Véhicule utilitaire selon la revendication 13, **caractérisé en ce que** l'élément structurel du châssis, sur lequel l'on prévoit l'encoche (33) pour le dispositif de retenue (19), est un profil transversal (3) du châssis orienté transversalement par rapport à l'étendue longitudinale (L) du véhicule utilitaire (N).

15. Véhicule utilitaire selon la revendication 14, **caractérisé en ce que** l'encoche (33) est formée par le bord marginal d'un évidemment (8) intégré dans le profil transversal (3).
